# EUROPÄISCHE PATENTSCHRIFT

(11) **EP 3 458 746 B1**
(45) Veröffentlichungstag und Bekanntmachung des Hinweises auf die Patenterteilung: **22.01.2020**
(21) Anmeldenummer: 17724563.6
(22) Anmeldetag: 19.05.2017
(51) Int. Cl.: F16J 15/16, F16J 15/3216, F16J 15/3228, F16J 15/3232, F16J 15/34, F16J 15/3276

(54) **ROTATIONSDICHTUNGSANORDNUNG MIT DRUCKAKTIVIERBARER ROTATIONSDICHTUNG SOWIE ROTATIONSDICHTUNG**
ROTARY SEAL ASSEMBLY WITH PRESSURE-ACTIVATABLE ROTARY SEAL, AND ROTARY SEAL
ENSEMBLE À JOINT D'ÉTANCHÉITÉ ROTATIF COMPRENANT UN JOINT D'ÉTANCHÉITÉ ROTATIF POUVANT ÊTRE ACTIVÉ PAR LA PRESSION ET JOINT D'ÉTANCHÉITÉ ROTATIF

(30) Priorität: 20.05.2016 DE 102016208697
(43) Veröffentlichungstag der Anmeldung: 27.03.2019
(73) Patentinhaber: Trelleborg Sealing Solutions Germany GmbH, 70565 Stuttgart (DE)
(72) Erfinder: JORDAN, Holger, 73765 Neuhausen (DE); WILKE, Mandy, 71034 Böblingen (DE)
(74) Vertreter: Kohler Schmid Möbus Patentanwälte
(86) Internationale Anmeldenummer: PCT/EP2017/062175
(87) Internationale Veröffentlichungsnummer: WO 2017/198854

(56) Entgegenhaltungen:
- EP-A2- 2 529 134
- DE-A1-102014 217 392
- DE-A1-102014 218 106
- US-A1- 2014 027 984

## Beschreibung

Die Erfindung betrifft eine Rotationsdichtungsanordnung mit einer druckaktivierbaren Rotationsdichtung sowie eine solche Rotationsdichtung. Rotationsdichtungsanordnungen mit zumindest einem rotierenden oder oszillierenden Maschinenteil weisen in der Regel sogenannte Rotationsdichtungen auf, um Schmierflüssigkeiten im System zu halten und das Eindringen von Schmutz und Wasser verhindern. Die Rotationsdichtungen ermöglichen darüber hinaus eine Abdichtung eines mittels eines Fluids druckbeaufschlagbaren Hochdruckbereichs gegenüber einem Niederdruckbereich und können beispielsweise als Drehdurchführungen eingesetzt werden. Mittels solcher Drehdurchführungen kann ein unter Druck stehendes Fluid zwischen einem feststehenden Maschinenteil und einem rotierbar gelagerten Maschinenteil übertragen werden.

Die in der Praxis eingesetzten Rotationsdichtungen können unter funktionellen Gesichtspunkten in dauerdichtende und sogenannte druckaktivierte Systeme unterschieden werden. Bei den dauerdichtenden Rotationsdichtungen, wie diese beispielsweise aus der US 5,174,839 B bekannt geworden sind, liegen die eingesetzten Rotationsdichtungselemente mit ihrer Dichtkante permanent an der jeweils zugeordneten Dichtfläche eines der beiden Maschinenteile der Rotationsdichtungsanordnung mit einer für das zuverlässige Abdichten des Hochdruckbereichs erforderlichen Kontaktflächenpressung an. Die Rotationsdichtungen unterliegen deshalb einem erhöhten mechanischen bzw. thermischen Verschleiß. Dies ist insbesondere bei kritischen Anwendungen sowie bei geforderten langen Standzeiten der Rotationsdichtungen problematisch. In der Praxis haben sich deshalb druckaktivierte Rotationsdichtungen etabliert, bei denen die Dichtkante des Rotationsdichtungselements nur im Bedarfsfall an der zugeordneten Dichtfläche eines der beiden Maschinenteile zur Anlage gebracht wird. Dies erfolgt in der Regel durch eine Druckbeaufschlagung des mit der Rotationsdichtung abzudichtenden Hochdruckbereichs, d.h. druckmittelgesteuert. Dadurch können deutlich höhere Standzeiten der Rotationsdichtung realisiert werden, als die bei vergleichbaren dauerdichtenden Systemen der Fall ist.

Eine Rotationsdichtungsanordnung mit druckaktivierbaren Rotationsdichtungen ist beispielsweise aus der EP 2 529 134 B1 bekannt. Die bekannte Rotationsdichtungsanordnung ist als eine Drehdurchführung ausgebildet. Die Rotationsdichtungselemente liegen jeweils unmittelbar an einem gummielastisch verformbaren Anlagekörper an, der niederdruckseitig an einem Stützelement abgestützt ist. Die Dichtkante des Rotationsdichtungselements wird durch den Anlagekörper im nicht-druckbeaufschlagten Zustand des abzudichtenden Hochdruck- oder Drehdurchführungsbereichs von der Dichtfläche weggedrückt und in einem Ruhezustand gehalten, in dem die Dichtkante von der Dichtfläche beabstandet angeordnet ist oder mit einer vernachlässigbar geringen Kontaktflächenpressung an der Dichtfläche anliegt. Für die zuverlässige Funktion der Rotationsdichtung ist eine hochpräzise Konturierung des gummielastisch verformbaren Anlageelements entscheidend. Dies stellt hohe fertigungstechnische Anforderungen und ist deshalb recht kostenaufwändig. Darüber hinaus wird bei einer Druckbeaufschlagung des Systems ein Reibschluss zwischen dem Anlagekörper und dem Rotationsdichtungselement erzeugt, der das Ansprechverhalten der Rotationsdichtung verschlechtern kann. Darüber hinaus kann eine Exzentrizität der Maschinenteile zu Funktionsbeeinträchtigungen der Rotationsdichtung führen. Wird die bekannte Rotationsdichtungsanordnung zwecks eines vereinfachten Einbaus in einer an sich bekannten Montagehülse, etwa aus Stahl, angeordnet, wie dies beispielsweise in der EP 2 655 941 A1 vorgeschlagen wird, so müssen zudem in der Regel zusätzliche Dichtungselemente vorgesehen werden, um eine zuverlässige statische Abdichtung der metallischen Montagehülse gegenüber dem die Dichtungshaltestruktur aufweisenden Maschinenteil zu gewährleisten.

Es ist deshalb die Aufgabe der Erfindung, eine Rotationsdichtungsanordnung mit einer druckaktivierbaren Rotationsdichtung sowie eine druckaktivierbare Rotationsdichtung anzugeben, die ein verbessertes Ansprechverhalten und Dichtungsvermögen selbst bei Exzentrizitäten der Maschinenteile aufweisen und die zugleich einfacher herzustellen und zu montieren ist.

Die die Rotationsdichtungsanordnung betreffende Aufgabe wird durch eine Rotationsdichtungsanordnung mit den in Anspruch 1 angegebenen Merkmalen gelöst. Die erfindungsgemäße Rotationsdichtung weist die in Anspruch 20 angegebenen Merkmale auf. Vorteilhafte Weiterbildungen der Erfindung sind in der Beschreibung sowie in den Unteransprüchen angegeben.

Die erfindungsgemäße Rotationsdichtungsanordnung weist ein erstes Maschinenteil und ein zweites Maschinenteil auf, das relativ zum ersten Maschinenteil um eine Rotationsachse rotierbar (gelagert) ist. Eines der beiden Maschinenteile weist eine Dichtungshaltestruktur und das jeweils andere Maschinenteil weist eine Dichtfläche auf. An der Dichtungshaltestruktur ist eine druckaktivierbare Rotationsdichtung angeordnet. Die Rotationsdichtung ermöglicht das Abdichten eines Hochdruckbereichs H gegenüber einem Niederdruckbereich N der Rotationsdichtungsanordnung und umfasst eine Montagehülse aus einem gummielastischen Material sowie zumindest ein Rotationsdichtungselement, das in oder an der Montagehülse angeordnet ist. Das Rotationsdichtungselement kann insbesondere aus einem zähelastischen Kunststoff, beispielsweise Polytetrafluorethylen (PTFE) oder einen zähelastischen Verbundmaterial bestehen. Die gummielastisch verformbare Montagehülse kann insbesondere aus einem Synthesekautschuk oder aus Gummi bestehen. Es versteht sich, dass das Material der Montagehülse dabei verstärkt, insbesondere faserverstärkt sein kann. Das Rotationsdichtungselement erstreckt sich von der Montagehülse in Richtung auf die Dichtfläche, beispielsweise des rotierbar angeordneten Maschinenteils, weg.

Das Rotationsdichtungselement kann als ein Radialdichtungselement oder als ein Axialdichtungselement ausgebildet sein. Im erstgenannten Fall ist das Rotationsdichtungselement ringförmig ausgeführt und erstreckt sich in radialer Richtung von der Montagehülse weg. Im letztgenannten Falle erstreckt sich das Rotationsdichtungselement in axialer Richtung von der Montagehülse weg. An seinem von der Montagehülse wegweisenden freien Ende bzw. freien Endabschnitt weist das Rotationsdichtungselement zumindest eine Dichtkante auf.

Die Rotationsdichtung umfasst ferner einen Stützkörper, der niederdruckbereichsseitig an einem elastisch verformbaren Stützbereich der gummielastisch verformbaren Montagehülse mittelbar oder unmittelbar anliegt. Das Rotationsdichtungselement ist an dem Stützkörper niederdruckbereichsseitig derart unmittelbar abgestützt, dass die Dichtkante des Rotationsdichtungselements im nicht-druckaktivierten Betriebszustand in einer Ruheposition angeordnet ist, in der die Dichtkante von der Dichtfläche beabstandet angeordnet ist oder ohne eine Kontaktflächenpressung bzw. im Wesentlichen ohne eine Kontaktflächenpressung an der Dichtfläche anliegt. Im letztgenannten Fall liegt die Dichtkante des Rotationsdichtungselements mit einer solch kleinen Kontaktflächenpressung an der Dichtfläche an, dass diese keiner nennenswerten thermischen und mechanischen Belastung unterworfen ist. Die Kontaktflächenpressung der Dichtkante beträgt in diesem Fall bevorzugt weniger als 10% derjenigen Kontaktflächenpressung, mit der die Dichtkante im druckbelasteten bzw. druckaktivierten Betriebszustand des Rotationsdichtungselements an der Dichtfläche anliegt. Das Rotationsdichtungselement wird mit seiner Dichtkante somit im Gegensatz zu der eingangs genannten bekannten Rotationsdichtungsanordnung im nicht druckbelasteten Zustand unmittelbar durch einen Stützkörper in seiner Ruheposition gehalten. Zu beachten ist, dass das Rotationsdichtungselement an dem Stützkörper unmittelbar anliegt.

Der Stützkörper ist beim Überschreiten eines vorgegebenen Differenzdruckwerts P_{Diff} zwischen dem Hochdruckbereich H und dem Niederdruckbereich N durch das Rotationsdichtungselement unter einer elastischen Verformung des Stützbereichs der gummielastischen Montagehülse (längs des Dichtspalts) zur Niederdruckseite hin bewegbar, sodass die Rotationsdichtung mit ihrer Dichtkante gegen die Dichtfläche gedrückt wird bzw. werden kann. Das Rotationsdichtungselement befindet sich dann mit seiner Dichtkante im vorgegebenen Dichtsitz an der Dichtfläche. Im Falle eines in radialer Richtung dichtenden Rotationsdichtungselements, d. h. eines als Radialdichtungselements ausgeführten Rotationsdichtungselements, ist der Stützkörper mithin in einer zur Rotationsachse axialen Richtung zum Niederdruckbereich hin bewegbar. Im Falle eines axialdichtenden Rotationsdichtungselements ist der Stützkörper mithin in einer zur Rotationsachse radialen Richtung bewegbar. Der Stützkörper wird somit bei einer Druckbeaufschlagung des Hochdruckbereichs durch das Rotationsdichtungselement jeweils in einer zur Dichtfläche parallelen Richtung zum Niederdruckbereich der Rotationsdichtungsanordnung hin verdrängt, sodass sich das Rotationsdichtungselement mit seiner Dichtkante an der Dichtfläche dichtend anlegen kann. Die Dichtkante des Rotationsdichtungselements wird im druckbelasteten Betriebszustand druckproportional zu einem im Hochdruckbereich H der Rotationsdichtungsanordnung herrschenden (Fluid-) Druck P_{H} gegen die Dichtfläche gepresst.

Bei einem Unterschreiten des vorgegebenen Differenzdruckwerts ist ein Rückbewegen des Stützkörpers durch eine elastische Rückverformung des Stützbereichs in Richtung des Hochdruckbereichs bewirkt, wodurch die Dichtkante der Rotationsdichtung (wieder) aus ihrer dichtenden Anlage an der Dichtfläche bewegt bzw. eine verschleißträchtige Kontaktflächenpressung der Dichtkante gegen die Dichtfläche aufgehoben wird. Die Rotationsdichtung ist somit durch den Stützkörper von dem gummielastisch verformbaren Stützbereich, durch dessen elastisches Rückstellvermögen eine Rückstellung der Rotationsdichtung in ihre Ruheposition bewirkt ist, räumlich entkoppelt. Dadurch kann das Ansprechverhalten der Rotationsdichtung gegenüber bekannten Rotationsdichtungsanordnungen nochmals weiter verbessert werden. Unerwünschte Reibeffekte zwischen dem Rotationsdichtungselement und dem gummielastisch verformbaren Material des Stützbereichs werden eliminiert. Der Stützkörper ermöglicht darüber hinaus eine verbesserte seitliche Führung des Rotationsdichtungselements. Darüber hinaus kann das Rotationsdichtungselement translatorische Relativbewegungen der beiden Maschinenteile, insbesondere eine Exzentrizität des rotierbaren Maschinenteils im Falle einer radial dichtend ausgeführten Rotationsdichtung, wirksamer kompensieren. Zu beachten ist darüber hinaus, dass die Montagehülse aufgrund ihrer gummielastischen Materialeigenschaften in ihrem Dichtsitz an/in der Dichtungshaltestruktur des ersten Maschinenteils selbstdichtend anordenbar bzw. angeordnet ist. Zusätzliche Dichtungselemente, wie beispielsweise O-Ringe oder dergl., sind für eine statische Abdichtung der Montagehülse gegenüber dem die Dichtungshaltestruktur aufweisenden Maschinenteil nicht weiter erforderlich. Insgesamt kann die Rotationsdichtungsanordnung dadurch auf einfache und kostengünstige Weise hergestellt und montiert werden.

Der Stützkörper besteht erfindungsgemäß aus einem zähelastisch verformbaren Material oder ist als ein Starrkörper ausgebildet.
Im erstgenannten Fall kann der Stützkörper bei der Druckaktivierung der Rotationsdichtung zumindest abschnittsweise verformt und dadurch in Richtung auf den Niederdruckbereich bewegt werden. Eine überlagerte translatorische Bewegung des gesamten Stützkörpers ist dabei durchaus möglich. Bei der vorgenannten elastischen Rückverformung des Stützbereichs der gummielastischen Montagehilfe verhält es sich dann umgekehrt.

Im letztgenannten Fall ist der Stützkörper durch die im Betrieb der Rotationsdichtungsanordnung auftretenden (Druck-) Kräfte nicht oder nur unwesentlich verformbar. Der Stützkörper kann insbesondere aus einem Kunststoff, aus Metall oder aus einer technischen Keramik bestehen. In dem Falle, dass die Rotationsdichtung bzw. deren Rotationsdichtungselement axial dichtend ausgeführt ist, ist der als Starrkörper ausgebildet Stützkörper bevorzugt mehrteilig ausgeführt. Dadurch können die Teilsegmente, insbesondere Ringhälften, des Stützkörpers in einer zur Rotationsachse radialen Richtung relativ zueinander translatorisch bewegt werden, um die Druckaktivierung und Rückstellung des Rotationsdichtungselements in seine Rückstellung zu ermöglichen.

Der Stützkörper wie auch das Rotationsdichtungselement kann/können in bzw. an der gummielastischen Montagehülse lose angeordnet sein. Dies bietet fertigungstechnische Vorteile und ermöglicht eine vereinfachte Montage der Rotationsdichtung bzw. Rotationsdichtungsanordnung. Darüber kann im Falle eines Verschleißes des Rotationsdichtungselements bedarfsweise nur das Rotationsdichtungselement kostengünstig gegen ein neues Rotationsdichtungselement ausgetauscht werden.

Die gummielastische Montagehülse kann nach der Erfindung vorteilhaft zumindest ein dynamisch dichtendes Dichtungselement bzw. eine dynamisch dichtende Dichtlippe aufweisen, das/die relativ zum Rotationsdichtungselement zum Niederdruckbereich hin versetzt angeordnet ist. Das Dichtungselement bzw. die Dichtlippe liegt an der Dichtfläche des zweiten Maschinenteils permanent, d.h. im druckbeaufschlagten wie auch im nicht-druckbeaufschlagten Betriebszustand der Rotationsdichtungsanordnung, an. Die Dichtlippe kann der Montagehülse insbesondere angeformt, d. h. einstückig mit dieser ausgebildet sein. Das Dichtungselement bzw. die Dichtlippe kann beispielsweise eine Öldichtung oder ein sogenannter Abstreifer sein. Dadurch kann die Rotationsdichtungsanordnung gegenüber in den Hochdruckbereich eindringenden Verunreinigungen besser geschützt werden.

Nach einer bevorzugten Weiterbildung der Erfindung weist der Stützkörper eine hochdruckbereichsseitige Seitenflanke (Schulter) auf, die zur Dichtfläche bzw. im Falle eines als Radialdichtungselement ausgeführten Rotationdichtungselements auch zur Rotationsachse, unter einem spitzen Winkel α mit α < 90° schräg verlaufend angeordnet ist. Dadurch kann mittels des Stützkörpers vereinfacht eine von der Dichtfläche des zweiten Maschinenteils wegweisende Kraft auf das Rotationsdichtungselement ausgeübt werden, um dessen Dichtkante in die vorgenannte Ruheposition, in der die Dichtkante von der Dichtfläche beabstandet ist bzw. ohne Kontaktflächenpressung/ohne eine nennenswerte Kontaktflächenpressung an der Dichtfläche anliegt, zu überführen.

Der Stützkörper kann nach einer besonders bevorzugten Weiterbildung der Erfindung eine Doppelfunktion erfüllen, indem dieser das Rotationsdichtungselement im nicht-druckbeaufschlagten Zustand der Rotationsdichtungsanordnung in Richtung der Dichtfläche überragt. Weist eines der beiden Maschinenteile, insbesondere das die Dichtfläche aufweisende Maschinenteil, eine Exzentrizität auf, so kann der Stützkörper beispielsweise als ein Anschlag dienen und das Rotationsdichtungselement so vor einer Beschädigung schützen. Im dem Falle, dass die Rotationsdichtung bzw. das Rotationsdichtungselement axialdichtend ausgeführt ist, kann der Stützkörper unerwünschte Axialbewegungen des die Dichtfläche aufweisenden Maschinenteils relativ zu dem die Dichtungshaltestruktur aufweisenden Maschinenteil begrenzen bzw. dämpfen. Tribo

Der Stützkörper kann nach der Erfindung in einer zur Dichtfläche orthogonalen Richtung, vorzugsweise spielfrei, an der gummielastischen Montaghülse anliegen und abgestützt sein. Im Falle einer radial dichtenden Rotationsdichtung liegt der Stützkörper somit umfangsseitig an der Montagehülse an und ist umfangsseitig an dieser abgestützt. Insgesamt kann dadurch eine vorgenannte Exzentrizität eines der beiden oder auch beider Maschinenteile wirksam gedämpft werden. Darüber hinaus kann sich die Montagehülse im Falle einer radial dichtenden Rotationsdichtung in radialer Richtung, insbesondere innenseitig, am Stützkörper abstützen und so zwischen diesem und der Dichtungsaufnahmestruktur eingespannt gehalten (geklemmt) angeordnet sein. Dadurch kann die Rotationsdichtung an dem die Dichtungshaltestruktur aufweisenden Maschinenteil vereinfacht drehfest festgelegt werden.

Nach einer besonders bevorzugten Weiterbildung der Erfindung ist der Stützkörper unmittelbar als ein Lagerteil für das die Dichtfläche aufweisende Maschinenteil ausgebildet. Der Stützkörper liegt somit im druckbeaufschlagten wie auch im nicht-druckbeaufschlagten Betriebszustand der Rotationsdichtungsanordnung an der Dichtfläche des Maschinenteils an. Dadurch kann eine schwimmende Lagerung des rotierbar gelagerten Maschinenteils erreicht werden. Ist die Rotationsdichtung radial dichtend, d.h. das Rotationsdichtungselement als ein Radialdichtungselement ausgeführt, bildet der Stützkörper somit im Falle einer innendichtenden Rotationsdichtung mit seiner Innenseite und im Falle einer außendichtenden Rotationsdichtung mit seiner Außenseite ein Gleitlager für das die Dichtfläche aufweisende Maschinenteil. Ist die Rotationsdichtung an der Dichtfläche axial dichtend ausgeführt, so bildet der Stützkörper ein Axiallager für das rotierbare Maschinenteil. Der Stützkörper kann durch die gummielastische Montagehülse an der Dichtfläche des rotierbaren Maschinenteils insbesondere vorgespannt anliegen.

Zwecks eines möglichst geringen Reibwiderstands zwischen dem Stützkörper und dem die Dichtfläche aufweisenden Maschinenteil kann der Stützkörper oder die Dichtfläche mit einer Gleitbeschichtung versehen sein. Der Stützkörper kann darüber hinaus dichtflächenseitig sogenannte Tribostrukturen aufweisen, durch die im Betrieb der Rotationsdichtungsanordnung ein zur Niederdruckseite gerichteter (Auswärts-)Transport von in den Hochdruckbereich eingetragenen Verunreinigungen ermöglicht ist. Die Tribostrukturen können beispielsweise eine in der an der Dichtfläche anliegenden Kontaktfläche des Stützkörpers angeordnete Nut oder zumindest eine im Querschnitt V-förmig gewinkelte Struktur umfassen, deren Schenkel in Richtung des Niederdruckbereichs divergieren.

Der Stützkörper kann nach der Erfindung grundsätzlich eine kreisförmige, elliptische oder polygonale Querschnittsform aufweisen. Im Hinblick auf einen möglichst geringen Materialeinsatz weist der Stützkörper bevorzugt eine Querschnittform auf, die sich in Richtung auf die dynamisch zu dichtende Dichtfläche des zweiten Maschinenteils verbreitert.

Für einen zuverlässigen Dichtsitz der gummielastischen Montagehülse an der Dichtungshaltestruktur des ersten Maschinenteils kann die Montagehülse an ihrer der Dichtungshaltestruktur zuweisenden Seite, d. h. im Falle einer radial dichtenden Rotationsdichtung beispielsweise an ihrer äußeren Umfangsseite (= Außenseite), zumindest eine statische Dichtlippe aufweisen, die an dem die Dichtungshaltestruktur aufweisenden Maschinenteil, insbesondere direkt an der Dichtungshaltestruktur des ersten Maschinenteils, dichtend anliegt. Die Dichtlippe kann dabei vorteilhaft mit dem Hochdruckbereich der Rotationsdichtungsanordnung fluidisch verbunden und druckaktivierbar sein. In diesem Fall ist die Dichtlippe durch einen im Hochdruckbereich herrschenden Fluiddruck - druckproportional - gegen das die Dichtungshaltestruktur aufweisende Maschinenteil bzw. gegen die Dichtungshaltestruktur pressbar. Dadurch kann zugleich ein Reibschluss zwischen der Montagehülse und dem die Dichtungshaltestruktur aufweisenden Maschinenteil selbsttätig eingestellt werden. Ein unerwünschtes Mitdrehen der Rotationsdichtungsanordnung mit dem rotierbar gelagerten Maschinenteil kann dadurch verhindert werden. Es versteht sich, dass die Montagehülse im vorgenannten Fall in einer zur Dichtfläche orthogonalen Richtung an einem Widerlager, beispielsweise am Stützkörper oder des die Dichtungshaltestruktur aufweisenden Maschinenteil, abgestützt sein muss.

Nach der Erfindung kann in einer zur Dichtfläche orthogonalen Richtung zwischen der Montagehülse und dem die Dichtungshaltestruktur aufweisenden ersten Maschinenteil ein Freiraum ausgebildet sein. Der Freiraum kann erfindungsgemäß mit dem Hochdruckbereich fluidisch verbunden sein. In dem Freiraum ist vorzugsweise ein Spannelement gelagert, das durch einen im Hochdruckbereich herrschenden Fluiddruck in axialer Richtung gegen eine außenseitig angeordnete Schrägfläche der Montagehülse oder der Dichtungshaltestruktur bewegbar ist, um die Montagehülse in Abhängigkeit vom Fluiddruck im Hochdruckbereich am ersten Maschinenteil reibschlüssig festzusetzen. Das Spannelement kann insbesondere als ein Spannring, bevorzugt als ein Keilring mit einer keilförmigen Querschnittsform, ausgeführt sein. Insgesamt kann dadurch ein unerwünschtes Mitdrehen der Rotationsdichtung mit dem rotierbar gelagerten Maschinenteil nochmals zuverlässiger unterbunden werden.

Die Dichtungshaltestruktur weist zwecks einer sicheren Abstützung bzw. Anlage der gummielastischen Montagehülse vorzugsweise eine niederdruckbereichsseitig angeordnete Schulter auf.

Das Rotationsdichtungselement kann insbesondere in einer Haltenut der gummielastisch verformbaren Montagehülse gehalten angeordnet sein. Dadurch wird die Montage der Rotationsdichtung weiter vereinfacht. Die Haltenut ist im Falle einer radial dichtenden Rotationsdichtung bzw. eines radial dichtenden Rotationsdichtungselements als Radialnut und im Falle einer axial dichtenden Rotationsdichtung als eine Axialnut ausgeführt.

Erfindungsgemäß kann die Montagehülse ein weiteres Rotationsdichtungselement aufweisen, das bevorzugt an einem zweiten Stützkörper, vorzugsweise in axialer Richtung, unmittelbar anliegt und abgestützt ist.

Die Rotationsdichtungsanordnung kann nach der Erfindung insbesondere als eine Drehdurchführung ausgebildet sein. Die Rotationsdichtungsanordnung kann dabei nach einer ersten Ausführungsalternative eine Rotationsdichtung umfassen, bei der die Montagehülse ein zweites Rotationsdichtungselement aufweist, das an einem zweiten Stützkörper unmittelbar anliegt und abgestützt ist. Der Hochdruckbereich ist in einer zur Dichtfläche parallelen Richtung zwischen den beiden Rotationsdichtungen ausgebildet und dient dem Fluid als Drehdurchführungsbereich. Im Falle einer radial dichtenden Rotationsdichtung, d.h. jeweils in radialer Richtung dichtender Rotationsdichtungselemente (= Radialdichtungselemente), ist der Hochdruckbereich mithin in axialer Richtung zwischen den beiden Rotationsdichtungselementen ausgebildet. Im Falle einer axial dichtenden Rotationsdichtung ist der als Drehdurchführungsbereich dienende Hochdruckbereich in einer radialen Richtung in dazu entsprechender Weise zwischen den beiden Rotationsdichtungselementen ausgebildet. In beiden Fällen ist der Hochdruckbereich durch die Rotationsdichtungselemente zumindest abschnittsweise seitlich unmittelbar begrenzt. Die gummielastische Montagehülse weist dabei zumindest einen Durchgang (beispielsweise eine Durchgangsbohrung) auf, durch den ein im ersten Maschinenteil angeordneter erster Fluidströmungskanal über den Hochdruck- oder Drehdurchführungsbereich mit einem im zweiten Maschinenteil angeordneten zweiten Fluidströmungskanal fluidisch verbunden oder verbindbar ist. Bei dieser Ausführungsform ist somit eine einzige Montagehülse für zwei Rotationsdichtungselemente und zwei Stützkörper vorgesehen.

Die Rotationsdichtungsanordnung kann nach einer zweiten Ausführungsalternative zwei der vorstehend erläuterten Rotationsdichtungen aufweisen. Die beiden Rotationsdichtungen sind in diesem Fall in einer zur Dichtfläche parallelen Richtung zueinander versetzt angeordnet. In dem Falle, dass die Rotationsdichtungselemente als Radialdichtungselemente ausgeführt sind, d. h. bei radial dichtenden Rotationsdichtungen, sind die Rotationsdichtungen mithin in einer zur Rotationsachse axialen Richtung hintereinanderliegend angeordnet. In dem Fall, dass die Rotationsdichtungselemente als Axialdichtungselemente ausgeführt sind, sind die Rotationsdichtungen koaxial zur Rotationsachse angeordnet. Die beiden Montagehülsen können dabei jeweils aneinander anliegen oder voneinander beabstandet angeordnet sein. In jedem Falle ist in einer der beiden oder zwischen den beiden Montagehülsen ein Durchgang ausgebildet, über die ein im ersten Maschinenteil angeordneter erster Fluidströmungskanal mit einem im zweiten Maschinenteil angeordneten zweiten Fluidströmungskanal fluidisch verbunden oder verbindbar ist. Der als Drehdurchführungsbereich fungierende Hochdruckbereich der Rotationsdichtungsanordnung ist auch bei dieser Ausführungsvariante zwischen den beiden Rotationsdichtungselementen angeordnet und durch diese unmittelbar seitlich begrenzt.

Die Rotationsdichtungsanordnung kann nach der Erfindung mehrere Drehdurchführungsbereiche aufweisen. Jeder weitere Drehdurchführungsbereich der Rotationsdichtungsanordnung ist dabei jeweils in einer dem ersten Drehdurchführungsbereich entsprechenden Weise durch Rotationsdichtungselemente derselben Rotationsdichtung oder einer Mehrzahl von Rotationsdichtungen begrenzt. Im erstgenannten Fall weist die gummielastische Montagehülse für jeden Drehdurchführungs- bzw. Hochdruckbereich H einen vorstehend genannten radialen Durchgang auf. Im letztgenannten Fall sind mehrere Rotationsdichtungen hintereinanderliegend bzw. koaxial zur Rotationsachse angeordnet.

Die Dichtungshaltestruktur des einen Maschinenteils kann erfindungsgemäß als eine Metallhülse ausgeführt sein, die an dem Maschinenteil, vorzugswiese im Preßsitz, gehalten angeordnet ist. Es versteht sich, dass die Rotationsdichtung in der Metallhülse vormontiert bereitgestellt gestellt sein kann, um diese auf einfache Weise im Dichtspalt zwischen den beiden Maschinenteilen anzuordnen.

Die vorstehend erläuterte Rotationsdichtungsanordnung weist ein breites Einsatzspektrum auf und kann insbesondere bei Reifendruckregelsystemen, etwa bei Kraftfahrzeugen oder bei Luftfahrzeugen, eigesetzt werden. Eines der beiden Maschinenteile kann dabei als eine Antriebswelle oder als eine Radachse ausgebildet sein. Es versteht sich, dass die Rotationsdichtungsanordnung dabei weitere erforderliche Bauteile, beispielsweise ein oder mehrere Ventile, aufweisen kann. Auch andere technische Anwendungsbereiche, etwa bei Maschinen der mechanischen oder chemischen Verfahrenstechnik oder bei Haushaltsgeräten, sind vorstellbar.

Die Erfindung betrifft zusammenfassend eine Rotationsdichtungsanordnung mit einer Rotationsdichtung, um einen Hochdruckbereich H gegenüber einem Niederdruckbereich N der Rotationsdichtungsanordnung abzudichten. Die Rotationsdichtung weist eine Montagehülse aus einem gummielastischen Material und zumindest ein druckaktivierbares Rotationsdichtungselement mit einer Dichtkante auf. Bei Überschreiten eines vorgegebenen Differenzdruckwerts P_{Diff} zwischen dem Hochdruckbereich H und dem Niederdruckbereich N legt sich die Dichtkante des Rotationsdichtungselements unter unmittelbarer Verdrängung eines an der gummielastischen Montagehülse federnd gelagerten Stützkörpers an die Dichtfläche eines Maschinenteils dichtend an. Bei einem Unterschreiten der vorgegebenen Differenzdruckwerts P_{Diff} ist eine Rückbewegung des Stützkörpers axial in Richtung des Hochdruckbereichs H bewirkt, sodass die Dichtkante des Rotationsdichtungselements in ihre Ruheposition zurückbewegt wird, in der das Rotationsdichtungselement an der Dichtfläche ohne Kontaktflächenpressung oder im Wesentlichen ohne eine Kontaktflächenpressung anliegt oder von der Dichtfläche beabstandet ist. Die Erfindung betrifft darüber hinaus eine Rotationsdichtung für eine derartige Rotationsdichtungsanordnung.

Nachfolgend wird die Erfindung anhand von in der Zeichnung wiedergegebenen Ausführungsbeispielen näher erläutert. In den Figuren sind einander entsprechende Bauteile jeweils mit gleichen Bezugszeichen versehen.

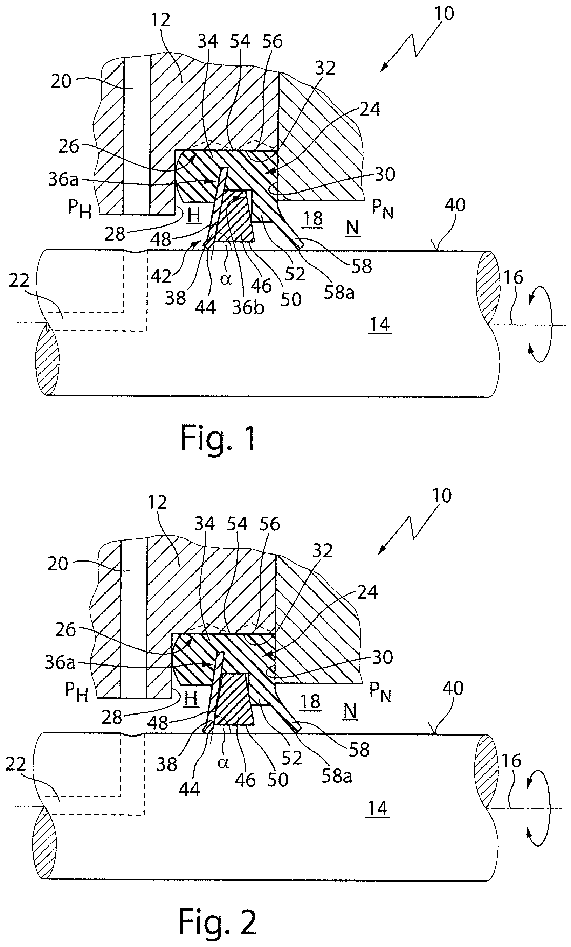

In der Zeichnung zeigen
- Fig. 1: eine Rotationsdichtungsanordnung mit einem Maschinenteil, das um eine Rotationsachse rotierbar gelagert ist und mit druckaktivierbaren Rotationsdichtungen zum radialen Abdichten eines als Drehdurchführungsbereich dienenden Hochdruckbereichs, wobei die Rotationsdichtung eine gummielastische Montagehülse mit einem Rotationsdichtungselement aufweist, das über einen Stützkörper an einem Stützbereich der Montagehülse in axialer Richtung federnd abgestützt ist, so dass das Rotationsdichtungselement unter Verdrängung des Stützkörpers druckgesteuert an die Dichtfläche des rotierbar gelagerten Maschinenteils pressbar ist, in einer ausschnittsweisen Schnittdarstellung;
- Fig. 2: die Rotationsdichtungsanordnung gemäß Fig. 1 mit in Dichtstellung angeordneter Rotationsdichtung, in einer ausschnittsweisen Schnittdarstellung;
- Fig. 3: eine zu der Rotationsdichtungsanordnung gemäß Fig. 1 ähnliche Rotationsdichtungsanordnung mit einer zusätzlichen Öldichtung, die an der Montagehülse angeformt ist und welche mittels eines Federelements gegen die Dichtfläche des rotierbaren Maschinenteils gespannt ist, in einer ausschnittsweisen Schnittdarstellung;
- Fig. 4: eine weitere Rotationsdichtungsanordnung mit einer bidirektional aktivierbaren Rotationsdichtung, in einer ausschnittsweisen Schnittdarstellung;
- Fig. 5: eine Rotationsdichtungsanordnung, bei der der Stützbereich der Montagehülse durch ein zur Montagehülse separat ausgebildetes gummielastisch verformbares Ringelement gebildet ist, in einer ausschnittsweisen Schnittdarstellung;
- Fig. 6: eine Rotationsdichtungsanordnung bei der die Rotationsdichtung einen druckaktivierbaren Spannring aufweist, in einer ausschnittsweisen Schnittdarstellung;
- Fig. 7: eine Rotationsdichtungsanordnung, bei der die Montagehülse der Rotationsdichtungsanordnung eine statische Dichtlippe aufweist, die druckproportional zu einem im Hochdruckbereich herrschenden Druck gegen die Dichtungshaltestruktur eines der Maschinenteile pressbar ist, in einer ausschnittsweisen Schnittdarstellung;
- Fig. 8: eine weitere Rotationsdichtungsanordnung bei der die Montagehülse zwei Rotationsdichtungselemente aufweist, im nicht-druckbelasteten Ruhezustand, in einer ausschnittsweisen Schnittdarstellung;
- Fig. 9: die Rotationsdichtungsanordnung gemäß Fig. 8 im druckbelasteten, d. h. druckaktivierten, Betriebszustand der Rotationsdichtung, in einer ausschnittsweisen Schnittdarstellung; und
- Fig. 10: eine Rotationsdichtungsanordnung, bei der die Rotationsdichtung bezüglich der Dichtfläche des zweiten Maschinenteils axial dichtend ausgeführt ist, in einer ausschnittsweisen Schnittdarstellung.

**Fig. 1** zeigt eine Rotationsdichtungsanordnung **10** mit einem ersten Maschinenteil **12** und mit einem zweiten Maschinenteil **14**, das um eine Dreh- oder Rotationsachse **16** relativ zum ersten Maschinenteil 12 rotierbar gelagert ist. Die Rotationsdichtungsanordnung 10 kann gemäß Fig. 1 als eine Drehdurchführung ausgeführt sein und erlaubt in diesem Fall einem Fluid den abgedichteten Übergang zwischen dem feststehenden ersten Maschinenteil 12 und dem rotierbar gelagerten zweiten Maschinenteil 14. Zwischen den beiden Maschinenteilen 12, 14 ist ein Dichtspalt **18** ausgebildet. Die beiden Maschinenteile 12, 14 weisen jeweils einen Fluidströmungskanal **20**, **22** für das Fluid auf, die über einen mit H bezeichneten Hochdruckbereich miteinander fluidisch verbindbar sind. Der Hochdruckbereich H des Dichtspalts 18 ist in axialer Richtung beiderseitig durch eine Rotationsdichtung **24** gegenüber einem axial außenliegend angeordneten Niederdruckbereich N abdichtbar. Die Rotationsdichtungen sind hier radial- und innendichtend ausgeführt. In Fig. 1 ist nur eine der beiden Rotationsdichtungen 24 in einer ausschnittsweise Darstellung gezeigt. Die Rotationsdichtungen 24 sind jeweils an einer Dichtungshaltestruktur **26** des ersten Maschinenteils 12 angeordnet. Die Dichtungshaltestruktur 26 kann insbesondere als eine Haltenut des ersten Maschinenteils 12 ausgeführt sein. Die Haltenut weist in diesem Fall zwei einander zuweisenden Nutflanken **28**, **30** auf, die über einen Nutboden **32** miteinander verbunden sind. Die Rotationsdichtung 24 kann an beiden Nutflanken 28, 30 in axialer Richtung, insbesondere vorgespannt, anliegen. Die niederdruckbereichsseitige Nutflanke 30 der Dichtungshaltestruktur 26 dient dabei als Anlageschulter für die Rotationsdichtung 24, um diese bei einer Druckbeaufschlagung des Hochdruckbereichs H in axialer Richtung in der Dichtungshaltestruktur 26 zu sichern.

Die gezeigte Rotationsdichtung 24 umfasst eine Montagehülse **34** aus einem gummielastischen Material. Die gummielastisch verformbare Montagehülse 34 weist eine erste Haltenut **36a** auf, in der ein druckaktivierbares Rotationsdichtungselement **38** gehalten angeordnet ist. Das Rotationsdichtungselement 38 ist als Radialdichtungselement ausgeführt und erstreckt sich von der Montagehülse 34 in Richtung auf eine Dichtfläche **40** des rotierbar angeordneten zweiten Maschinenteils 14 weg. Das Rotationsdichtungselement 38 weist an seinem von der Montagehülse 34 wegeweisenden freien Ende **42** eine Dichtkante **44** auf. Das Rotationsdichtungselement 38 besteht vorteilhaft aus einem zähelastischen Material mit vorzugsweise geringem Reibungskoeffizienten, wie beispielsweise Polytetrafluorethylen (PTFE) oder Polyetheretherketon (PEEK) oder auch einem Faserverbundwerkstoff.

Die Rotationsdichtung 24 umfasst einen ringförmigen Stützkörper oder Stützring **46**, an dem das Rotationsdichtungselement 38 im nicht-druckbelasteten wie auch im druckbelasteten Betriebszustand der Rotationsdichtung 24 in axialer Richtung anliegt und abgestützt ist. Der Stützkörper 46 kann aus einem zähelastisch verformbaren Material bestehen oder ist als ein Starrkörper ausgeführt. Der Stützkörper ist im letztgenannten Fall durch die im Hochdruckbereich H der Rotationsdichtungsanordnung 10 auftretenden Betriebsdrücke in radialer Richtung unverformbar bzw. im Wesentlichen unverformbar. Der Stützkörper 46 besteht vorzugsweise aus einem Kunststoffmaterial, Metall, Verbundwerkstoff oder aus einer technischen Keramik.

Der Stützkörper 46 kann sich in eine zweite Haltenut **36b** der gummielastischen Montagehülse 34 hineinerstrecken. Der Stützkörper 46 weist eine dem Hochdruckbereich H zuweisende Seitenflanke (Schulter) **48** auf, an der das Rotationsdichtungselement 38 in axialer Richtung unmittelbar anliegt. Die Seitenflanke 48 dient dem Rotationsdichtungselement 38 somit als eine Anlagefläche. Die Seitenflanke 48 des Stützkörpers 46 ist zur Dichtfläche 40 bzw. zur Rotationsachse 16 vorzugsweise unter einem spitzen Winkel **α** mit α < 90° schräg verlaufend angeordnet. Der Winkel α beträgt vorliegenden ungefähr 80°. Gemäß Fig. 1 kann der Stützkörper eine sich radial zur Dichtfläche 40 hin verbreiternde Querschnittform aufweisen. Der ringförmige Stützkörper 46 kann mit seiner Innenseite 50 von der Dichtfläche 40 des zweiten Maschinenteils 14 vollumfänglich beabstandet angeordnet sein, wie dies in Fig. 1 gezeigt ist. Alternativ kann der Stützkörper 46 auch an der Dichtfläche 40 unmittelbar anliegen und ein (Gleit-)Lager für das die Dichtfläche aufweisende Maschinenteil 14 bilden. Insbesondere im letztgenannten Fall kann dadurch eine Überbeanspruchung der Dichtkante 44 der Rotationdichtung 24 bei einer Exzentrizität des rotierbar gelagerten Maschinenteils 14 entgegengewirkt werden.

Der Stützkörper 46 ist niederdruckbereichsseitig von einem gummielastisch verformbaren Stützbereich 52 der Montagehülse 34 in axialer Richtung überdeckt. Der Stützkörper 46 liegt an dem Stützbereich 52 in axialer Richtung unmittelbar an.

Die Rotationsdichtung ist in ihrem nicht-druckbelasteten Betriebszustand in ihrer in Fig. 1 gezeigten Ruheposition angeordnet. In dieser Ruheposition ist die Dichtkante 44 der Rotationsdichtung 24 durch den Stützkörper 46 von der Dichtfläche beabstandet gehalten angeordnet oder an der Dichtfläche 40 ohne eine Kontaktflächenpressung bzw. mit einer zu vernachlässigenden geringen Kontaktflächenpressung gehalten angeordnet.

Beim Einleiten des druckbeaufschlagten Fluids in den als Drehdurchführungsbereich dienenden Hochdruckbereich H wird das Rotationsdichtungselement 38 bei Überschreiten eines Differenzdruckwerts P_{Diff} eines im Hochdruckbereich herrschenden Drucks P_{H} gegenüber einem im Niederdruckbereich N herrschenden Druck P_{N} druckproportional in axialer Richtung gegen den Stützkörper 46 gepresst, so dass dieser unter einer elastischen Verformung des Stützbereichs 52 der gummielastischen Montagehülse 34 axial in Richtung auf die Niederdruckseite N soweit nach außen verschoben wird, dass sich das Rotationsdichtungselement 38 mit seiner Dichtkante 44 in einer radialen Richtung an der Dichtfläche 40 des zweiten Maschinenteils 14 dichtend anlegt. Die Verstellbewegung des Stützkörpers kann, sofern dieser aus einem zähelastischen Material besteht, zumindest teilweise durch eine abschnittsweise (elastische) Verformung des Stützkörpers 46 in Richtung des Niederdruckbereichs N bedingt sein. Dadurch wird eine fluiddichte Abdichtung des Hochdruckbereichs H bewirkt, wie dies in **Fig. 2** dargestellt ist. Im druckbeaufschlagten Betriebszustand der Rotationsdichtung 24 liegt die Dichtkante 44 somit im vorgegebenen Dichtsitz an der zugeordneten Dichtfläche 40 des zweiten Maschinenteils 14 dichtend an.

Bei Unterschreiten des vorgegebenen Differenzdruckwerts P_{Diff} wird der Stützkörper 46 durch das elastische Rückstellvermögen des Stützbereichs 52 der gummielastischen Montagehülse 34 in seine in Fig. 1 gezeigte Ruheposition in axialer Richtung zurückbewegt. Dadurch wird das Rotationsdichtungselement 38 mit seiner Dichtkante 44 an der Dichtfläche 40 entlastet bzw. erneut von der Dichtfläche 40 weggedrückt, so dass diese erneut ohne bzw. ohne eine verschleißträchtige Kontaktflächenpressung an der Dichtfläche anliegt bzw. von der Dichtfläche 40 des zweiten Maschinenteils 14 in radialer Richtung beabstandet ist (Fig. 1).

Der Stützkörper 46 kann das Rotationsdichtungselement 38 im nicht-druckbelasteten Betriebszustand der Rotationsdichtung 24 radial in Richtung der Dichtfläche 40 des zweiten Maschinenteils 14 überragen. Der Stützkörper 46 kann dadurch eine besonders großflächige Abstützung des Rotationsdichtungselements 38 gewährleisten. Selbst bei Hochdruckanwendungen kann dadurch eine Extrusion des Rotationsdichtungselements 38 axial zwischen der Dichtfläche 40 und dem Stützkörper 46 hindurch vermieden werden. Darüber hinaus kann der Stützkörper 46 dann im Falle einer Exzentrizität eines der beiden Maschinenteile 12, 14 als ein Anschlagelement dienen, so dass ein unerwünschtes Schleifen des Rotationsdichtungselements 38 an der Dichtfläche 40 des zweiten Maschinenteils 14 im nicht-druckbelasteten Betriebszustand verhindert werden kann. Im druckbelasteten Betriebszustand der Rotationsdichtung 24 kann zudem einer übermäßigen (lokalen) Beanspruchung der Dichtkante 44 des Rotationsdichtungselements 38 zuverlässig entgegengewirkt werden. Der ringförmige Stützkörper 46 liegt hierzu vorzugsweise in radialer Richtung, vorzugsweise spielfrei, an der gummielastischen Montaghülse 34 an und ist an dieser abgestützt. Dadurch kann eine Auslenkung des Stützkörpers 46 in radialer Richtung zuverlässig gedämpft werden. Der Stützkörper 46 kann auch mit seiner Innenseite 50 an der Dichtfläche 40 anliegen und so ein (Gleit-)Lager für das rotierbare Maschinenteil 14 bilden.

Die gummielastische Montagehülse 34 liegt mit ihrer Außenseite **54** an der Dichtungshaltestruktur 26, hier dem Nutboden 32, des ersten Maschinenteils 12 reibschlüssig an, um ein unerwünschtes Mitdrehen der Montagehülse 34 mit dem rotierbar gelagerten zweiten Maschinenteil 14 zu verhindern. Die Montagehülse 34 weist hierzu vorzugsweise ein radiales Übermaß relativ zum Innendurchmesser der Dichtungshaltestruktur des ersten Maschinenteils 12 auf. Dadurch kann ein radialer Dichtsitz der Montagehülse 34 am ersten Maschinenteil 12 erreicht werden. Für ein besonders gutes (statisches) Dichtungsvermögen kann die Montagehülse 34 an ihrer Außenseite mit zumindest einer oder auch mit mehreren statischen Dichtlippen **56** versehen sein, die hier mit gestrichelter Linie im unbelasteten Zustand angedeutet sind. Es versteht sich, dass sich die Dichtlippe(n) 56 über den gesamten Umfang der Montagehülse 34 erstreckt/erstrecken. Die Montagehülse 34 kann darüber hinaus durch eine entsprechende Bemaßung des Stützkörpers 46 in radialer Richtung gegen die Dichtungshaltestruktur 26 des ersten Maschinenteils 12 gespannt sein.

Die Rotationsdichtung 24 kann zusätzlich zum Rotationsdichtungselement 38 zumindest eine dynamisch dichtende Dichtlippe 58 aufweisen, die relativ zum jeweiligen Rotationsdichtungselement 38 der Montagehülse 34 in axialer Richtung zum Niederdruckbereich N hin versetzt angeordnet ist. Die Dichtlippe 58 ist der gummielastischen Montagehülse 34 vorzugsweise angeformt. Die Dichtlippe 58 liegt mit ihrer Dichtkante **58a** im druckbeaufschlagten wie auch im nicht-druckbeaufschlagten Zustand der Rotationsdichtungsanordnung 10 an der Dichtfläche 40 des zweiten Maschinenteils 14 dichtend an. Die Dichtlippe 58 kann insbesondere als eine Öldichtung dienen bzw. ausgeführt sein. Nach einer in der Zeichnung nicht näher gezeigten Ausführungsform der Rotationsdichtungsanordnung 10 kann die Dichtlippe 58 zur Montagehülse 34 separat ausgeführt sein.

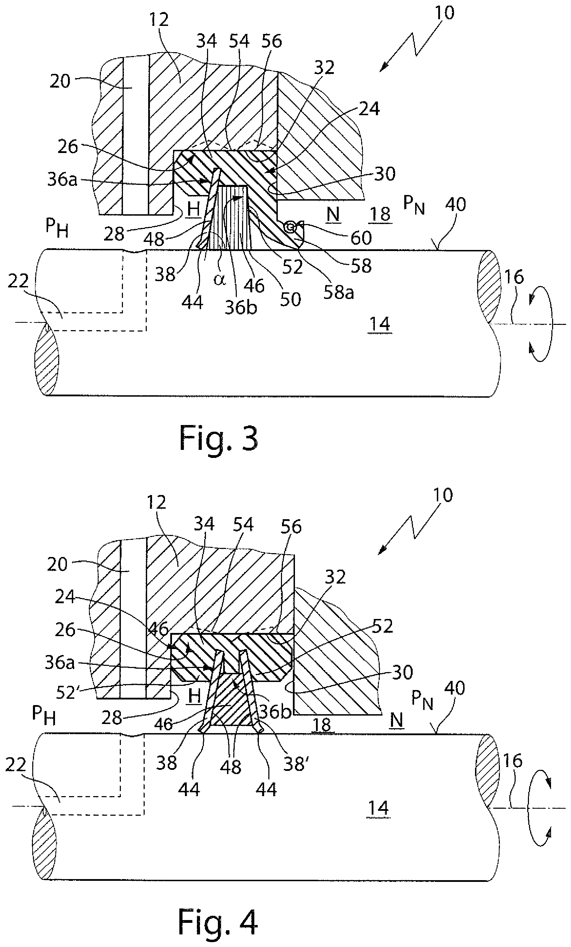

In **Fig. 3** ist eine weitere Rotationsdichtungsanordnung 10 ausschnittsweise gezeigt, die sich von der in Fig. 1 gezeigten Rotationsdichtungsanordnung 10 im Wesentlichen darin unterscheidet, dass die als Öldichtung dienende Dichtlippe 58 der Montagehülse 34 mittels eines Federelements 60, hier einer Wurmfeder, in radialer Richtung gegen die Dichtfläche 40 gespannt ist. Die Dichtlippe 58 kann aufgrund ihrer axialen Längserstreckung auch höhergradigen Exzentrizitäten des zweiten Maschinenteils 14 folgen und dadurch eine zuverlässige Abdichtung des Dichtspalts 18 gegenüber eindringenden Verschmutzungen oder dergl. gewährleisten. Der Stützkörper 46 liegt beispielhaft mit seiner Innenseite 50 an der Dichtfläche 40 an. Der Stützkörper 46 bildet dadurch ein (Gleit-)Lager für das rotierbare Maschinenteil 14.

**Fig. 4** zeigt eine Rotationsdichtungsanordnung 10 in einer ausschnittsweisen Darstellung, bei der die gezeigte Rotationsdichtung 24 eine Montagehülse 34 mit zwei Rotationsdichtungselementen 38, **38'** aufweist. Die beiden Rotationsdichtungselemente 38, 38' sind jeweils in axialer Richtung zu beiden Seiten des Stützkörpers 46 angeordnet. Der Stützkörper 46 kann bei dieser Bauform beiderseitig über jeweils ein Rotationsdichtungselement 38, 38' an der gummielastischen Montagehülse 34 in axialer Richtung abgestützt sein.

Die beiden Rotationsdichtungselemente 38, 38' der Montagehülse 34 können baugleich ausgeführt sein. Das weitere Rotationsdichtungselement 38' ist in gleicher Weise druckaktivierbar, wie dies bei dem in der Fig. links dargestellten Rotationsdichtungselement 38 der Fall ist. Wird der Niederdruckbereich N (im Sinne eines funktionellen Hochdruckbereichs) mit einem Druck beaufschlagt, der größer als ein vorgegebener Differenzdruckwert des Niederdruckbereichs N relativ zum Hochdruckbereich H ist, kann mithin das weitere Rotationsdichtungselement 38' unter einem axialen Verschieben des Stützkörpers 46 gegen den zweiten Stützbereich 52' der gummielastischen Montagehülse 34 axial in Richtung des Hochdruckbereichs H (welcher sodann funktionell den Niederdruckbereich darstellt) in radialer Richtung gegen die Dichtfläche 40 des zweiten Maschinenteils 14 gepresst und so der Dichtspalt bei einer ggf. auftretenden Druckumkehr abgedichtet werden. In diesem Betriebszustand der Rotationsdichtungsanordnung sind somit der Hochdruckbereich H und der Niederdruckbereich N funktionell vertauscht. Die in Fig. 4 gezeigte Rotationsdichtung 24 ist somit beiderseitig druckaktivierbar. Die Rotationsdichtungsanordnung 10 weist dadurch nochmals breitere Einsatzmöglichkeiten auf.

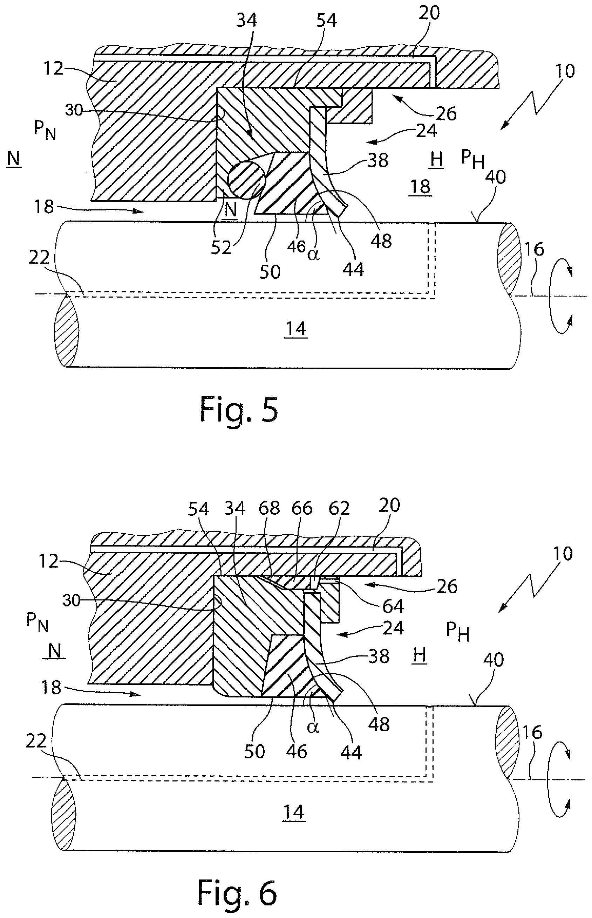

Die gummielastische Montagehülse 34 kann Abschnitte mit unterschiedlichen Elastizitätsmoduln aufweisen. So kann die Montagehülse beispielsweise in axialer Richtung einen kleineren Elastizitätsmodul aufweisen, als in radialer Richtung. Dies kann beispielsweise durch eine Zweikomponentenbauweise der Montagehülse erreicht werden. Auch kann die Montagehülse mehrteilig ausgeführt sein. So kann der Stützabschnitt 52 der Montagehülse 34 ein zum Grundkörper der Montagehülse separat ausgeführtes gummielastisch verformbares Stützelement umfassen, wie dies in **Fig. 5** gezeigt ist. Das Stützelement kann dabei insbesondere aus Gummi, Silikon oder einem anderen geeigneten gummielastisch verformbaren Material bestehen.

In **Fig. 6** ist eine Rotationsdichtungsanordnung 10 gezeigt, bei der in radialer Richtung zwischen der Montagehülse 34 und dem die Dichtungshaltestruktur 26 aufweisenden Maschinenteil 12 ein Freiraum **62** ausgebildet ist. Der Freiraum 62 ist, hier über einen Axialkanal **64** der Montagehülse 34, mit dem Hochdruckbereich H fluidisch verbunden. In dem Freiraum 62 ist ein axial wirkender Klemm- oder Spannring **66**, der hier in Form eines Keilrings ausgebildet ist, axialverschieblich gelagert. Der Spannring 66 ist durch einen im Hochdruckbereich H herrschenden Fluiddruck in radialer Richtung gegen eine umfangsseitige Schrägfläche **68** der Montagehülse 34 bewegbar, um die Montagehülse 34 druckproportional am ersten Maschinenteil 12 reibschlüssig festzusetzen. Es versteht sich, dass alternativ auch die Dichtungshaltestruktur 26 mit einer geeigneten Schrägfläche für den Spannring 66 versehen sein kann. Der Spannring 66 kann eine von der Keilform abweichende Querschnittsform aufweisen.

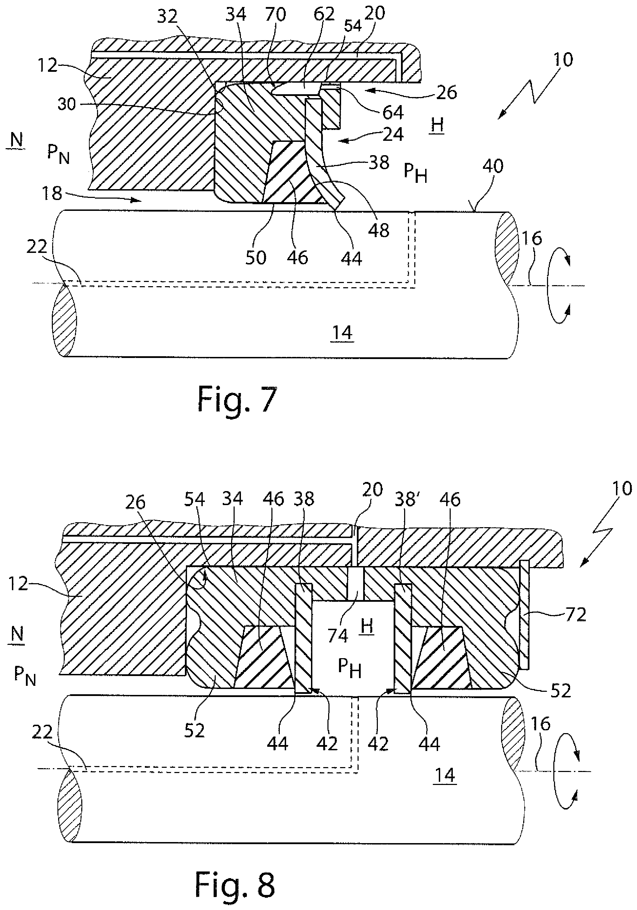

Bei der in **Fig. 7** gezeigten Rotationsdichtungsanordnung 10 weist die Montagehülse 34 an ihrer Außenseite 54 eine statisch dichtende Dichtlippe **70** auf, die mit dem Hochdruckbereich H fluidisch verbunden ist. Die Dichtlippe 70 kann mithin durch ein im Hochdruckbereich H angeordnetes Fluid druckbeaufschlagt werden und durch dieses druckproportional gegen die Dichtungshaltestruktur 26 des ersten Maschinenteils gepresst werden. Dadurch kann einerseits eine besonders zuverlässige Abdichtung zwischen der Montagehülse 34 und dem ersten Maschinenteil 12 erreicht werden. Andererseits kann dadurch einem unerwünschten Mitdrehen der Montagehülse 34 mit dem rotierbar gelagerten Maschinenteil 14 selbst bei Hochdruck- bzw. Höchstdruckanwendungen zuverlässig entgegengewirkt werden. Zu beachten ist, dass die Montagehülse 34 in radialer Richtung innenseitig durch den Stützkörper 46 abgestützt ist.

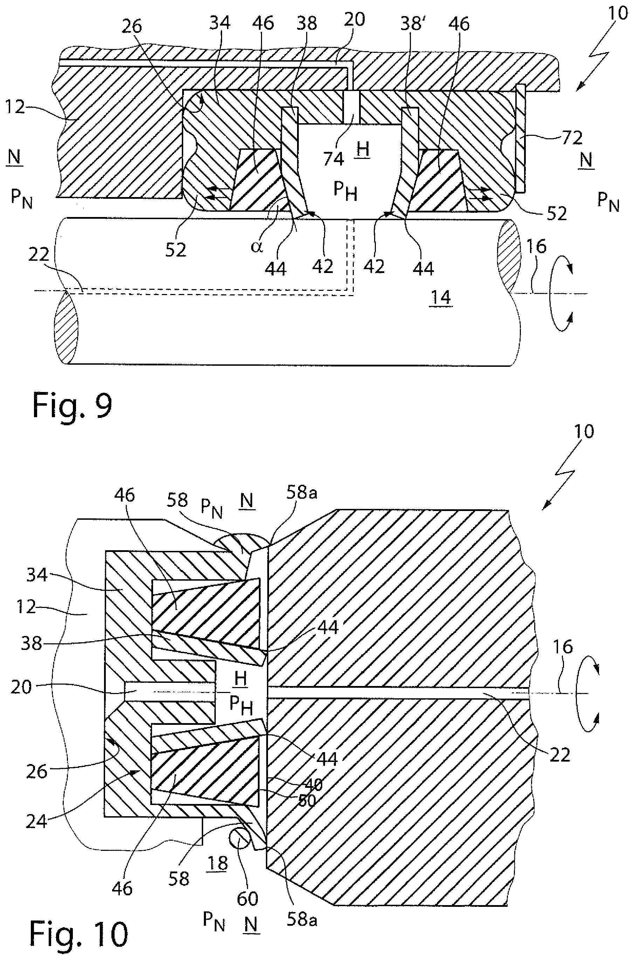

In **Fig. 8** ist eine weitere Rotationsdichtungsanordnung 10 in einer ausschnittsweisen Darstellung gezeigt. Die Rotationsdichtungsanordnung ist auch hier als eine Drehdurchführung ausgebildet. Die gummielastische Montagehülse 34 weist zur beiderseitigen Abdichtung des als Drehdurchführungsbereich dienenden Hochdruckbereichs H zwei Rotationsdichtungselemente 38, 38' auf. Die Montagehülse 34 kann am ersten Maschinenteil 12 mittels eines Sprengrings **72** oder dergl. in axialer Richtung lagegesichert gehalten angeordnet sein. Die beiden Rotationsdichtungselemente 38, 38' können jeweils in einer zu den Rotationsdichtungsanordnungen 10 der Figuren 1 bis 7 entsprechenden Weise ausgeführt sein. Hier weisen die Rotationsdichtungselemente 38, 38' beispielhaft jeweils eine rechteckige Querschnittsform auf. Die Montagehülse 34 ist (wandseitig) mit einer Durchgangsbohrung **74** versehen, über die die beiden Strömungskanäle 20, 22 der Maschinenteile 12, 14 miteinander fluidisch verbunden sind. Die Durchgangsbohrung 74 erstreckt sich somit in radialer Richtung. Beide Rotationsdichtungselemente 38, 38' sind im nicht-druckbelasteten Zustand zur Rotationsachse 16 im Wesentlichen orthogonal verlaufend angeordnet. Bei Überschreiten des vorgegebenen Differenzdruckwerts P_{Diff} zwischen dem im Hochdruckbereich H herrschenden Druck P_{H} und dem Niederdruckbereich herrschenden (Atmosphären-)Druck P_{N} werden die beiden Rotationsdichtungselemente derart in axialer Richtung zum jeweiligen Niederdruckbereich N deflektiert bzw. ausgelenkt, dass sich die Dichtkanten 44 der beiden Rotationsdichtungselemente 38 an der Dichtfläche 40 des zweiten Maschinenteils 14 dichtend anlegen. Dabei werden die Stützkörper 46, wie vorstehend bereits erläutert, in axialer Richtung gegen den jeweiligen Stützbereich 52 der gummielastischen Montagehülse 34 bewegt, wie dies in **Fig. 9** figürlich dargestellt ist.

Bei einem Unterschreiten des vorgegebenen Differenzdruckwerts P_{Diff} im Hochdruckbereich H werden die ringförmigen Stützkörper 46 durch das elastische Rückstellvermögen des jeweiligen Stützbereichs 52 der gummielastischen Montagehülse 34 wieder in Richtung des Hochdruckbereichs H verschoben. Die Rotationsdichtungselemente 38 werden mithin durch die Stützkörper 46 in ihre jeweilige nicht-druckbelastete Ausgangsposition zurückbewegt. In dieser Ausgangsposition liegen die Dichtkanten 44 der Rotationsdichtungselemente 38 an der Dichtfläche 40 des zweiten Maschinenteils 14 nicht oder ohne eine verschleißbehaftete Kontaktflächenpressung an.

In **Fig. 10** ist eine weitere Rotationsdichtungsanordnung 10 gezeigt, die als eine Drehdurchführung ausgebildet ist. Die Rotationsdichtungsanordnung 10 unterscheidet sich von den vorstehend im Zusammenhang mit den Figuren 1 bis 9 erläuterten Rotationsdichtungsanordnungen im Wesentlichen darin, dass die Rotationsdichtung 24 hier axial dichtend ausgeführt ist. Die Dichtfläche 40 des zweiten Maschinenteils 14 ist deshalb nicht durch dessen Mantelfläche, sondern durch dessen Stirnseite gebildet. Die Rotationsdichtung 24 weist mithin ein ringförmiges Rotationsdichtungselement 38 auf, das bezüglich der Rotationsachse 16 des zweiten Maschinenteils 14 axial dichtend, d.h. als ein Axialdichtungselement, ausgeführt ist. Der Stützkörper 46 ist ringförmig ausgeführt und umgreift das Rotationsdichtungselement 38 außenseitig. Der Stützkörper 46 und das Rotationsdichtungselement 38 sind mithin koaxial zur Rotationsachse 16 angeordnet. Der Stützkörper 46 ist vorliegend einstückig ausgeführt und besteht aus einem zähelastisch verformbaren Material. Der Stützkörper 46 kann auch als ein Starrkörper ausgebildet sein. In diesem Fall ist der Stützkörper 46 mehrteilig, insbesondere zweigeteilt, ausgeführt, so dass dessen Teilsegmente (beispielsweise Ringhälften) in einer zur Rotationsachse 16 radialen Richtung translatorisch verstellbar sind, um die vorstehend erläuterte Druckaktivierung und erneute Rückstellung des Rotationsdichtungselements 38 in seine Ruheposition zu ermöglichen.

Bei den in der Zeichnung gezeigten Ausführungsformen der Rotationsdichtungsanordnung 10 liegen die Rotationsdichtungselemente 38 dem jeweilig zugeordneten Stützkörper 46 vorzugsweise lose an. Die Materialpaarung des jeweiligen Stützkörpers 46 und des daran seitlich abgestützten Rotationsdichtungselements 38 ist im Hinblick auf ein besonders feinfühliges Ansprechverhalten der Rotationsdichtung auf eine Druckerhöhung im Hochdruckbereich H vorzugsweise auf ein reibungsarmes Gleitspiel der beiden Bauteile ausgelegt.

Die vorstehend erläuterten Rotationsdichtungsanordnungen 10 bzw. Rotationsdichtungen 24 eignen sich für eine Vielzahl technischer Anwendungen. So können diese insbesondere für Reifendruckkontrollsysteme bei Kraftfahrzeugen eingesetzt werden. In diesem Fall kann das zweite Maschinenteil 14 eine Antriebswelle bzw. eine Radachse eines Kraftfahrzeugs (nicht gezeigt) sein. Das erste Maschinenteil 12 kann dabei der Lagerung des zweiten Maschinenteils 14 dienen.

## Patentansprüche

1. Rotationsdichtungsanordnung (10) mit einem ersten Maschinenteil (12) und mit einem zweiten Maschinenteil (14), das relativ zum ersten Maschinenteil (12) um eine Rotationsachse (16) rotierbar ist, wobei eines der beiden Maschinenteile (12, 14) eine Dichtungshaltestruktur (26) und das andere der beiden Maschinenteile (12, 14) eine Dichtfläche (40) aufweist, und mit einer Rotationsdichtung (24), die an der Dichtungshaltestruktur (26) des einen Maschinenteils (12, 14) angeordnet ist, um einen Hochdruckbereich H gegenüber einem Niederdruckbereich N der Rotationsdichtungsanordnung (10) abzudichten, umfassend:
- eine Montagehülse (34) aus einem gummielastischen Material;
- zumindest ein druckaktivierbares Rotationsdichtungselement (38, 38') mit einer Dichtkante (44), das in oder an der Montagehülse (34) angeordnet ist und welches sich von der Montagehülse in Richtung auf die Dichtfläche (40) wegerstreckt;
- einen Stützkörper (46), der niederdruckbereichsseitig an einem Stützbereich (52, 52') der gummielastisch verformbaren Montagehülse (34) anliegt und an dem das Rotationsdichtungselement (38) niederdruckbereichsseitig unmittelbar abgestützt ist, derart, dass die Dichtkante (44) im nicht-druckbelasteten Betriebszustand in einer Ruheposition angeordnet ist, in der die Dichtkante (44) von der Dichtfläche (40) beabstandet angeordnet ist oder ohne eine Kontaktflächenpressung oder im Wesentlichen ohne eine Kontaktflächenpressung an der Dichtfläche (44) anliegt, wobei
- durch das Rotationsdichtungselement (38, 38') bei Überschreiten eines vorgegebenen Differenzdruckwerts P_{Diff} zwischen dem Hochdruckbereich H und dem Niederdruckbereich N ein Bewegen des Stützkörpers (46) unter einer elastischen Verformung des Stützbereichs (52, 52') in Richtung des Niederdruckbereichs N bewirkt ist, sodass das Rotationsdichtungselement (38, 38') mit seiner Dichtkante (44) dichtend an die Dichtfläche (40) gedrückt wird und wobei
- bei einem Unterschreiten des vorgegebenen Differenzdruckwerts P_{Diff} eine elastische Rückverformung des Stützbereichs (52, 52') und damit einhergehend ein Zurückbewegen des Stützkörpers (46) in Richtung des Hochdruckbereichs H bewirkt ist, sodass die Dichtkante (44) des Rotationsdichtungselements (38, 38') aus ihrer dichtenden Anlage an der Dichtfläche (40) in ihre Ruheposition zurückbewegt wird.

2. Rotationsdichtungsanordnung nach Anspruch 1, **dadurch gekennzeichnet, dass** das Rotationsdichtungselement (38, 38') als ein Radialdichtungselement oder als ein Axialdichtungselement ausgebildet ist.

3. Rotationsdichtungsanordnung nach Anspruch 1 oder 2, **dadurch gekennzeichnet, dass** der Stützkörper (46) als ein Lagerteil für das die Dichtfläche (40) aufweisende Maschinenteil (12, 14) ausgeführt ist und an der Dichtfläche (40), vorzugsweise unmittelbar, anliegt.

4. Rotationsdichtungsanordnung nach einem der vorhergehenden Ansprüche, **dadurch gekennzeichnet, dass** der Stützkörper (46) aus Metall, einem Hartkunststoff, einem Verbundwerkstoff oder aus einer technischen Keramik besteht.

5. Rotationsdichtungsanordnung nach einem der vorhergehenden Ansprüche, **dadurch gekennzeichnet, dass** die gummielastische Montagehülse (34) zumindest eine dynamisch dichtende Dichtlippe (58) aufweist, die relativ zum Rotationsdichtungselement (38, 38') zum Niederdruckbereich N hin versetzt angeordnet ist und die im druckbeaufschlagten wie auch im nicht-druckbeaufschlagten Zustand der Rotationsdichtungsanordnung (10) an der Dichtfläche (40) des zweiten Maschinenteils (14) dichtend anliegt.

6. Rotationsdichtungsanordnung nach einem der vorhergehenden Ansprüche, **dadurch gekennzeichnet, dass** der Stützkörper (46) eine hochdruckbereichsseitige Seitenflanke (48) aufweist, die zur Dichtfläche (40) unter einem spitzen Winkel α mit α < 90°, bevorzugt mit α < 80°, schräg verlaufend angeordnet ist.

7. Rotationsdichtungsanordnung nach einem der vorhergehenden Ansprüche, **dadurch gekennzeichnet, dass** der Stützkörper (46) das Rotationsdichtungselement (38, 38') im nicht-druckbeaufschlagten Betriebszustand in Richtung der Dichtfläche (40) überragt.

8. Rotationsdichtungsanordnung nach einem der vorhergehenden Ansprüche, **dadurch gekennzeichnet, dass** der Stützkörper (46) umfangsseitig, vorzugsweise spielfrei, an der gummielastischen Montagehülse (34) anliegt und abgestützt ist.

9. Rotationsdichtungsanordnung nach einem der vorhergehenden Ansprüche, **dadurch gekennzeichnet, dass** der Stützkörper (46) eine sich in Richtung auf die Dichtfläche verbreiternde Querschnittform aufweist.

10. Rotationsdichtungsanordnung nach einem der vorergehenden Ansprüche, **dadurch gekennzeichnet, dass** die gummielastische Montagehülse (34) an ihrer Außenseite zumindest eine statisch dichtende Dichtlippe (56) aufweist, die am ersten Maschinenteil (12) dichtend anliegt.

11. Rotationsdichtungsanordnung nach Anspruch 10, **dadurch gekennzeichnet, dass** die Dichtlippe (56) mit dem Hochdruckbereich H fluidisch verbunden ist und durch einen im Hochdruckbereich H herrschenden Fluiddruck gegen das erste Maschinenteil (12) pressbar ist.

12. Rotationsdichtungsanordnung nach einem der vorhergehenden Ansprüche, **dadurch gekennzeichnet, dass** die Dichtungshaltestruktur (26) als Haltenut ausgeführt ist und niederdruckseitig eine Nutflanke (30) aufweist, an der die gummielastische Montagehülse (34) anliegt.

13. Rotationsdichtungsanordnung nach einem der vorhergehenden Ansprüche, **dadurch gekennzeichnet, dass** zwischen der Montagehülse (34) und dem ersten Maschinenteil (12) ein Freiraum (62) ausgebildet ist, der mit dem Hochdruckbereich H fluidisch verbunden ist, wobei in dem Freiraum (62) ein Spannelement (66) gelagert ist, das durch einen im Hochdruckbereich H herrschenden Fluiddruck P_{H} in axialer Richtung gegen eine Schrägfläche (68) der Montagehülse (34) oder der Dichtungshaltestruktur (26) bewegbar ist, um die Montagehülse (34) reibschlüssig am ersten Maschinenteil (12) festzusetzen.

14. Rotationsdichtungsanordnung nach einem der vorhergehenden Ansprüche, **dadurch gekennzeichnet, dass** das Rotationsdichtungselement (38, 38') in einer Haltenut (36a, 36b) der gummielastisch verformbaren Montagehülse (34) gehalten angeordnet ist.

15. Rotationsdichtungsanordnung nach einem der vorhergehenden Ansprüche, **dadurch gekennzeichnet, dass** die Montagehülse (34) ein weiteres Rotationsdichtungselement (38, 38') aufweist, das bevorzugt an einem zweiten Stützkörper (46) in axialer Richtung unmittelbar anliegt und abgestützt ist.

16. Rotationsdichtungsanordnung nach Anspruch 15, **dadurch gekennzeichnet, dass** die Rotationsdichtungsanordnung (10) als eine Drehdurchführung ausgebildet ist, wobei der Hochdruckbereich H zwischen den beiden Rotationsdichtungselementen (38, 38') angeordnet ist und einen ersten Drehdurchführungsbereich bildet und wobei die Montagehülse (34) zumindest eine Durchgangsbohrung (74) aufweist, um einen im ersten Maschinenteil (12) angeordneten ersten Fluidströmungskanal (20) über den Drehdurchführungsbereich mit einem im zweiten Maschinenteil (14) angeordneten zweiten Fluidströmungskanal (22) fluidisch zu verbinden.

17. Rotationsdichtungsanordnung nach einem der Ansprüche 1 bis 15, **dadurch gekennzeichnet, dass** die Rotationsdichtungsanordnung (10) als eine Drehdurchführung ausgebildet ist und eine weitere Rotationsdichtung (24) aufweist, wobei der Hochdruckbereich H zwischen den beiden Rotationsdichtungen (24) ausgebildet ist und einen ersten Drehdurchführungsbereich bildet, über den ein im ersten Maschinenteil (12) angeordneter erster Fluidströmungskanal (20) mit einem im zweiten Maschinenteil (14) angeordneten zweiten Fluidströmungskanal (22) fluidisch verbunden ist.

18. Rotationsdichtungsanordnung nach einem der Ansprüche 16 oder 17, **gekennzeichnet durch** eine Mehrzahl von Drehdurchführungsbereichen, die jeweils in axialer Richtung beiderseitig durch ein Rotationsdichtungselement (38, 38') derselben Rotationsdichtung (24) oder einer Mehrzahl von Rotationsdichtungen (24) begrenzt sind.

19. Rotationsdichtungsanordnung nach einem der vorhergehenden Ansprüche, **dadurch gekennzeichnet, dass** Dichtungshaltestruktur (26) des einen Maschinenteils (12, 14) durch eine Metallhülse gebildet ist, die an dem einen Maschinenteil (12, 14) im Preßsitz unmittelbar gehalten angeordnet ist.

## Claims

1. Rotary seal assembly (10) comprising a first machine part (12) and comprising a second machine part (14) which is rotatable relative to the first machine part (12) about an axis of rotation (16), wherein one of the two machine parts (12, 14) has a seal holding structure (26) and the other of the two machine parts (12, 14) has a sealing surface (40), and comprising a rotary seal (24) which is arranged on the seal holding structure (26) of the one machine part (12, 14) in order to seal off a high pressure region H from a low pressure region N of the rotary seal assembly (10), comprising:
- a mounting sleeve (34) made of a rubber-elastic material;
- at least one rotary seal element (38, 38') which can be activated by pressure and has a sealing edge (44) which is arranged in or on the mounting sleeve (34) and extends away from the mounting sleeve in the direction of the sealing surface (40);
- a support body (46) which abuts a support region (52, 52') of the rubber-elastically deformable mounting sleeve (34) on the low pressure region side and against which the rotary seal element (38) is directly supported on the low pressure region side such that, in a non-pressurized operating state, the sealing edge (44) is arranged in a rest position in which the sealing edge (44) is arranged spaced apart from the sealing surface (40) or abuts the sealing surface (44) without a contact surface pressure or substantially without a contact surface pressure, wherein,
- when a predetermined differential pressure value P_{Diff} between the high pressure region H and the low pressure region N is exceeded, a movement of the support body (46) is effected by means of the rotary seal element (38, 38') under elastic deformation of the support region (52, 52') in the direction of the low-pressure region N such that the sealing edge (44) of the rotary seal element (38, 38') is sealingly pressed against the sealing surface (40) and wherein,
- when the differential pressure falls below the predetermined differential pressure value P_{Diff}, an elastic recovery of the support region (52, 52') and therefore an accompanying movement back of the support body (46) in the direction of the high pressure region H is effected such that the sealing edge (44) of the rotary seal element (38, 38') is moved back out of the sealing abutment of said edge against the sealing surface (40) into the rest position thereof.

2. Rotary seal assembly according to claim 1, **characterized in that** the rotary seal element (38, 38') is designed as a radial seal element or as an axial seal element.

3. Rotary seal assembly according to either claim 1 or claim 2, **characterized in that** the support body (46) is designed as a bearing part for the machine part (12, 14) having the sealing surface (40), and abuts, preferably directly, the sealing surface (40).

4. Rotary seal assembly according to any of the preceding claims, **characterized in that** the support body (46) consists of metal, a hard plastics material, a composite material or a technical ceramic.

5. Rotary seal assembly according to any of the preceding claims, **characterized in that** the rubber-elastic mounting sleeve (34) has at least one dynamically-sealing sealing lip (58) which is arranged offset relative to the rotary seal element (38, 38') toward the low pressure region N and which sealingly abuts the sealing surface (40) of the second machine part (14) in the pressurized and in the non-pressurized state of the rotary seal assembly (10).

6. Rotary seal assembly according to any of the preceding claims, **characterized in that** the support body (46) has a side flank (48) on the high pressure region side, which flank is arranged so as to extend obliquely to the sealing surface (40) at an acute angle α, where α < 90°, preferably where α < 80°.

7. Rotary seal assembly according to any of the preceding claims, **characterized in that** the support body (46) projects beyond the rotary seal element (38, 38') in the direction of the sealing surface (40) in the non-pressurized operating state.

8. Rotary seal assembly according to any of the preceding claims, **characterized in that** the support body (46) circumferentially, preferably without play, abuts and is supported on the rubber-elastic mounting sleeve (34).

9. Rotary seal assembly according to any of the preceding claims, **characterized in that** the support body (46) has a cross-sectional shape which widens in the direction of the sealing surface.

10. Rotary seal assembly according to any of the preceding claims, **characterized in that** the rubber-elastic mounting sleeve (34) has at least one statically-sealing sealing lip (56) on the outer face thereof, which lip sealingly abuts the first machine part (12).

11. Rotary seal assembly according to claim 10, **characterized in that** the sealing lip (56) is fluidically connected to the high pressure region H and can be pressed against the first machine part (12) by a fluid pressure prevailing in the high pressure region H.

12. Rotary seal assembly according to any of the preceding claims, **characterized in that** the seal holding structure (26) is designed as a holding groove and has a groove flank (30) on the low pressure side, which flank is abutted by the rubber-elastic mounting sleeve (34).

13. Rotary seal assembly according to any of the preceding claims, **characterized in that** a free space (62) is formed between the mounting sleeve (34) and the first machine part (12), which space is fluidically connected to the high pressure region H, a clamping element (66) being mounted in the free space (62), which element is movable in the axial direction against an inclined surface (68) of the mounting sleeve (34) or of the seal holding structure (26) by means of a fluid pressure P_{H} prevailing in the high pressure region H, in order to fix the mounting sleeve (34) to the machine part (12) in a frictionally engaged manner.

14. Rotary seal assembly according to any of the preceding claims, **characterized in that** the rotary seal element (38, 38') is arranged so as to be held in a holding groove (36a, 36b) of the rubber-elastically deformable mounting sleeve (34).

15. Rotary seal assembly according to any of the preceding claims, **characterized in that** the mounting sleeve (34) has a further rotary seal element (38, 38') which preferably directly abuts and is supported on a second support body (46) in the axial direction.

16. Rotary seal assembly according to claim 15, **characterized in that** the rotary seal assembly (10) is designed as a rotary union, the high pressure region H being arranged between the two rotary seal elements (38, 38') and forming a first rotary union region, and the mounting sleeve (34) having at least one through-hole (74) in order to fluidically connect a first fluid flow channel (20) arranged in the first machine part (12) to a second fluid flow channel (22) arranged in the second machine part (14) via the rotary union region.

17. Rotary seal assembly according to any of claims 1 to 15, **characterized in that** the rotary seal assembly (10) is designed as a rotary union and has a further rotary seal (24), the high pressure region H being formed between the two rotary seals (24) and forming a first rotary union region, via which a first fluid flow channel (20) arranged in the first machine part (12) is fluidically connected to a second fluid flow channel (22) arranged in second machine part (14).

18. Rotary seal assembly according to either claim 16 or claim 17, **characterized by** a plurality of rotary union regions, each of which are delimited on both sides in the axial direction by a rotary seal element (38, 38') of the same rotary seal (24) or of a plurality of rotary seals (24).

19. Rotary seal assembly according to any of the preceding claims, **characterized in that** the seal holding structure (26) of the one machine part (12, 14) is formed by a metal sleeve which is arranged so as to be directly held on the one machine part (12, 14) in a press fit.

## Revendications

1. Arrangement de garniture d'étanchéité rotative (10) comprenant une première partie de machine (12) et comprenant une deuxième partie de machine (14) qui peut tourner autour d'un axe de rotation (16) par rapport à la première partie de machine (12), l'une des deux parties de machine (12, 14) possédant une structure de maintien de garniture d'étanchéité (26) et l'autre des deux parties de machine (12, 14) une surface d'étanchéité (40), et comprenant une garniture d'étanchéité rotative (24) qui est disposée contre la structure de maintien de garniture d'étanchéité (26) de ladite partie de machine (12, 14) afin de rendre étanche une zone de haute pression H par rapport à une zone de basse pression N de l'arrangement de garniture d'étanchéité rotative (10), comprenant :
- une douille de montage (34) en un matériau élastique en caoutchouc ;
- au moins un élément de garniture d'étanchéité rotative (38, 38') activable par la pression, comprenant un bord d'étanchéité (44) qui est disposé dans ou sur la douille de montage (34) et qui s'étend depuis la douille de montage en direction de la surface d'étanchéité (40) ;
- un corps d'appui (46), qui repose du côté basse pression contre une zone d'appui (52, 52') de la douille de montage (34) déformable en matériau élastique en caoutchouc et contre lequel s'appuie directement l'élément de garniture d'étanchéité rotative (38) du côté de la zone basse pression de telle sorte que le bord d'étanchéité (44), dans l'état opérationnel non soumis à la pression, est disposé dans une position de repos dans laquelle le bord d'étanchéité (44) est disposé espacé de la surface d'étanchéité (40) ou repose contre la surface d'étanchéité (40) sans un pressage des surfaces de contact ou sensiblement sans un pressage des surfaces de contact,
- un déplacement du corps d'appui (46) sous une déformation élastique de la zone d'appui (52, 52') en direction de la zone de basse pression N étant produit par l'élément de garniture d'étanchéité rotative (38, 38') en cas de dépassement d'une valeur de pression différentielle P_{Diff} prédéfinie entre la zone de haute pression H et la zone de basse pression N, de sorte que l'élément de garniture d'étanchéité rotative (38, 38') est poussé avec son bord d'étanchéité (44) contre la surface d'étanchéité (40) avec réalisation d'étanchéité et
- un reformage élastique de la zone d'appui (52, 52') et, découlant de celui-ci, un retour en arrière du corps d'appui (46) en direction de la zone de haute pression H étant produit dans le cas d'un franchissement vers le bas de la valeur de pression différentielle P_{Diff} prédéfinie, de sorte que le bord d'étanchéité (44) de l'élément de garniture d'étanchéité rotative (38, 38') est ramené en arrière dans sa position de repos depuis son application avec réalisation d'étanchéité contre la surface d'étanchéité (40) .

2. Arrangement de garniture d'étanchéité rotative selon la revendication 1, **caractérisé en ce que** l'élément de garniture d'étanchéité rotative (38, 38') est réalisé sous la forme d'un élément de garniture d'étanchéité radial ou d'un élément de garniture d'étanchéité axial.

3. Arrangement de garniture d'étanchéité rotative selon la revendication 1 ou 2, **caractérisé en ce que** le corps d'appui (46) est réalisé sous la forme d'une partie de palier pour la partie de machine (12, 14) qui possède la surface d'étanchéité (40) et repose, de préférence directement, contre la surface d'étanchéité (40) .

4. Arrangement de garniture d'étanchéité rotative selon l'une des revendications précédentes, **caractérisé en ce que** le corps d'appui (46) se compose de métal, d'une matière plastique dure, d'un matériau composite ou d'une céramique technique.

5. Arrangement de garniture d'étanchéité rotative selon l'une des revendications précédentes, **caractérisé en ce que** la douille de montage (34) élastique en caoutchouc possède au moins une lèvre d'étanchéité (58) qui réalise l'étanchéité dynamiquement, laquelle est disposée décalée en direction de la zone de basse pression N par rapport à l'élément de garniture d'étanchéité rotative (38, 38') et qui, dans l'état soumis à la pression ainsi que dans l'état non soumis à la pression de l'arrangement de garniture d'étanchéité rotative (10), repose avec réalisation d'étanchéité contre la surface d'étanchéité (40) de la deuxième partie de machine (14).

6. Arrangement de garniture d'étanchéité rotative selon l'une des revendications précédentes, **caractérisé en ce que** le corps d'appui (46) possède un flanc latéral (48) côté zone de haute pression qui est disposé en suivant un tracé oblique par rapport à la surface d'étanchéité (40) selon un angle aigu a, avec α < 90°, de préférence avec α < 80°.

7. Arrangement de garniture d'étanchéité rotative selon l'une des revendications précédentes, **caractérisé en ce que** le corps d'appui (46), dans l'état opérationnel non soumis à la pression, fait saillie de l'élément de garniture d'étanchéité rotative (38, 38') en direction de la surface d'étanchéité (40).

8. Arrangement de garniture d'étanchéité rotative selon l'une des revendications précédentes, **caractérisé en ce que** le corps d'appui (46) repose du côté du pourtour, de préférence sans jeu, contre la douille de montage (34) élastique en caoutchouc et s'appuie sur celle-ci.

9. Arrangement de garniture d'étanchéité rotative selon l'une des revendications précédentes, **caractérisé en ce que** le corps d'appui (46) présente une forme de section transversale qui s'élargit en direction de la surface d'étanchéité.

10. Arrangement de garniture d'étanchéité rotative selon l'une des revendications précédentes, **caractérisé en ce que** la douille de montage (34) élastique en caoutchouc possède au niveau de son côté extérieur au moins une lèvre d'étanchéité (56) qui réalise l'étanchéité de manière statique, laquelle repose contre la première partie de machine (12) avec réalisation d'étanchéité.

11. Arrangement de garniture d'étanchéité rotative selon la revendication 10, **caractérisé en ce que** la lèvre d'étanchéité (56) est reliée fluidiquement à la zone de haute pression H et peut être pressée contre la première partie de machine (12) par une pression de fluide qui règne dans la zone de haute pression H.

12. Arrangement de garniture d'étanchéité rotative selon l'une des revendications précédentes, **caractérisé en ce que** la structure de maintien de garniture d'étanchéité (26) est réalisée sous la forme d'une rainure de maintien qui possède du côté basse pression un flanc de rainure (30) contre lequel repose la douille de montage (34) élastique en caoutchouc.

13. Arrangement de garniture d'étanchéité rotative selon l'une des revendications précédentes, **caractérisé en ce qu'**entre la douille de montage (34) et la première partie de machine (12) est formé un espace libre (62) qui est relié fluidiquement à la zone de haute pression H, un élément de serrage (66) étant logé dans l'espace libre (62), lequel peut être déplacé par une pression de fluide P_{H} qui règne dans la zone de haute pression H dans la direction axiale contre une surface biseautée (68) de la douille de montage (34) ou de la structure de maintien de garniture d'étanchéité (26) afin d'immobiliser la douille de montage (34) contre la première partie de machine (12) par adhérence par friction.

14. Arrangement de garniture d'étanchéité rotative selon l'une des revendications précédentes, **caractérisé en ce que** l'élément de garniture d'étanchéité rotative (38, 38') est disposé maintenu dans une rainure de maintien (36a, 36b) de la douille de montage (34) élastique en caoutchouc.

15. Arrangement de garniture d'étanchéité rotative selon l'une des revendications précédentes, **caractérisé en ce que** la douille de montage (34) possède un élément de garniture d'étanchéité rotative (38, 38') supplémentaire qui, de préférence, repose directement contre un deuxième corps d'appui (46) dans la direction axiale et s'appuie sur celui-ci.

16. Arrangement de garniture d'étanchéité rotative selon la revendication 15, **caractérisé en ce que** l'arrangement de garniture d'étanchéité rotative (10) est réalisé sous la forme d'une traversée rotative, la zone de haute pression H étant disposée entre les deux éléments de garniture d'étanchéité rotative (38, 38') et formant une première zone de traversée rotative et la douille de montage (34) possédant au moins un alésage traversant (74) afin de relier fluidiquement par le biais de la zone de traversée rotative un premier canal d'écoulement de fluide (20), disposé dans la première partie de machine (12), avec un deuxième canal d'écoulement de fluide (22), disposé dans la deuxième partie de machine (14).

17. Arrangement de garniture d'étanchéité rotative selon l'une des revendications 1 à 15, **caractérisé en ce que** l'arrangement de garniture d'étanchéité rotative (10) est réalisé sous la forme d'une traversée rotative et possède une garniture d'étanchéité rotative (24) supplémentaire, la zone de haute pression H étant disposée entre les deux garnitures d'étanchéité rotatives (24) et formant une première zone de traversée rotative par le biais de laquelle un premier canal d'écoulement de fluide (20), disposé dans la première partie de machine (12), est relié fluidiquement avec un deuxième canal d'écoulement de fluide (22), disposé dans la deuxième partie de machine (14) .

18. Arrangement de garniture d'étanchéité rotative selon l'une des revendications 16 ou 17, **caractérisé par** une pluralité de zones de traversée rotatives qui sont respectivement délimitées des deux côtés dans la direction axiale par un élément de garniture d'étanchéité rotative (38, 38') de la même garniture d'étanchéité rotative (24) ou une pluralité de garnitures d'étanchéité rotatives (24).

19. Arrangement de garniture d'étanchéité rotative selon l'une des revendications précédentes, **caractérisé en ce que** la structure de maintien de garniture d'étanchéité (26) de ladite partie de machine (12, 14) est formée par une douille métallique qui est disposée maintenue directement en ajustement serré contre ladite partie de machine (12, 14).
